# EUROPEAN PATENT APPLICATION

(11) **EP 4 351 019 A1**
(43) Date of publication of application: **10.04.2024**
(21) Application number: 22837839.4
(22) Date of filing: 13.06.2022
(51) Int. Cl.: H04B 1/40, H04B 1/04, H04B 1/18

(54) **ANTENNA MATCHING CIRCUIT**

(30) Priority: 05.07.2021 KR 20210088150
(71) Applicant: Samsung Electronics Co., Ltd., Suwon-si, Gyeonggi-do 16677 (KR)
(72) Inventor: LEE, Sungjun, Suwon-si Gyeonggi-do 16677 (KR); KIM, Kyoungmok, Suwon-si Gyeonggi-do 16677 (KR); LEE, Kookjoo, Suwon-si Gyeonggi-do 16677 (KR); LEE, Sangha, Suwon-si Gyeonggi-do 16677 (KR); PARK, Sehyun, Suwon-si Gyeonggi-do 16677 (KR); YUN, Himchan, Suwon-si Gyeonggi-do 16677 (KR); LIM, Jaeho, Suwon-si Gyeonggi-do 16677 (KR); HWANG, Soonho, Suwon-si Gyeonggi-do 16677 (KR)
(74) Representative: HGF
(86) International application number: PCT/KR2022/008330
(87) International publication number: WO 2023/282485

(57) **Abstract**

An embodiment of the present disclosure relates to an antenna matching circuit capable of configuring adaptive antenna matching topology in an electronic device supporting wireless communication. To this end, the electronic device comprises: an antenna radiator; a radio frequency (RF) module for processing an RF signal; a feed line for electrically connecting the antenna radiator and the RF module; a switch circuit formed in a parallel structure with respect to the feed line by a plurality of points being electrically coupled, the plurality points comprising at least one first point and at least one second point positioned on the feed line; a first lumped element arranged such that, on the feed line, the at least one first point is electrically connected to the at least one second point; and a second lumped element arranged such that the at least one first point is electrically connected to at least one first terminal included in the switch circuit. Other various embodiments may be possible.

## Description

### [Technical Field]

An embodiment of the disclosure relates to an antenna matching circuit applied to an electronic device supporting wireless communication.

### [Background Art]

Along with the development of wireless communication technology, various electronic devices such as smartphones are commonly used in everyday life, and thus use of contents is increasing. An electronic device may include an antenna for supporting various communication technologies. An electronic device may include various matching circuits to improve the performance of an antenna.

### [Detailed Description of the Invention]

### [Technical Problem]

The electronic device may include a matching circuit to secure antenna performance according to various frequency bands or situations of the electronic device. An antenna matching topology may be applied to such a matching circuit included in an electronic device. For example, in an electronic device supporting a broad frequency band (e.g., 1.7 GHz to 5 GHz), impedance matching of an antenna adapted for each frequency may be performed to obtain communication performance specified for each frequency in that frequency band. For example, for an embedded antenna patterned on a printed circuit board (PCB), the antenna matching topology should be selectively applied in consideration of power transfer and reflection loss.

The matching circuit in the electronic device may include a switch and a passive element, and the passive element located between a port of the switch and a ground may generate a parasitic resonance.

An embodiment of the disclosure may provide an impedance matching circuit in an electronic device supporting wireless communication.

### [Technical Solution]

According to an embodiment, an electronic device may comprise an antenna radiator; a radio frequency (RF) module processing a RF signal, a feeding line electrically connecting the antenna radiator with the RF module, a switch circuit electrically coupled to a plurality of points including at least one first point and at least one second point positioned on the feeding line, and the switch circuit being disposed in a parallel structure with respect to the feeding line, a first lumped element disposed such that the at least one first point is electrically connected to the at least one second point, on the feed line, and a second lumped element disposed such that the at least one first point is electrically connected to the switch circuit.

### [Advantageous Effects]

According to an embodiment proposed in the disclosure, the electronic device may not only provide impedance matching topology of various antennas, but also obtain enhanced communication performance for each broadband characteristic and frequency of the antenna.

### [Brief Description of Drawings]

FIG. 1 is a block diagram illustrating an electronic device in a network environment according to various embodiments.
FIG. 2 is a block diagram for antenna matching in an electronic device for supporting wireless communication, according to an embodiment.
FIG. 3 illustrates an embodiment of a matching unit structure described with reference to FIG. 2.
FIGS. 4A to 4C illustrate examples of a structure of a tuner described with reference to FIG. 3.
FIG. 5 illustrates an embodiment in which the structure described with reference to FIGS. 3 and 4A is applied to a matching unit described with reference to FIG. 2.
FIG. 6 illustrates an example of the structure of a switch circuit described with reference to FIGS. 4A to 4C.
FIG. 7 illustrates an example of the structure of a switch circuit described with reference to FIGS. 4A to 4C.
FIGS. 8A to 8F illustrate various examples of impedance matching topology of an antenna with a structure described with reference to FIGS. 3, 4C, and 7 in a matching unit described with reference to FIG. 2.
FIG. 9 illustrates an embodiment of a matching unit structure described with reference to FIG. 2.
FIG. 10 illustrates an example of application of an impedance matching circuit in an electronic device, according to an embodiment.
FIG. 11 illustrates an example of a structure in which an impedance matching circuit is mounted in an electronic device, according to an embodiment.

### [Mode for Carrying out the Invention]

Hereinafter, various embodiments will be described in detail with reference to the accompanying drawings. In the following description, specific details such as detailed configurations and components will be provided only to help a general understanding of embodiments of the disclosure. Therefore, it would be apparent to those skilled in the art that various changes and modifications may be made without departing from the scope and spirit of the disclosure. Further, descriptions of well-known features and configurations may be omitted for clarity and brevity.

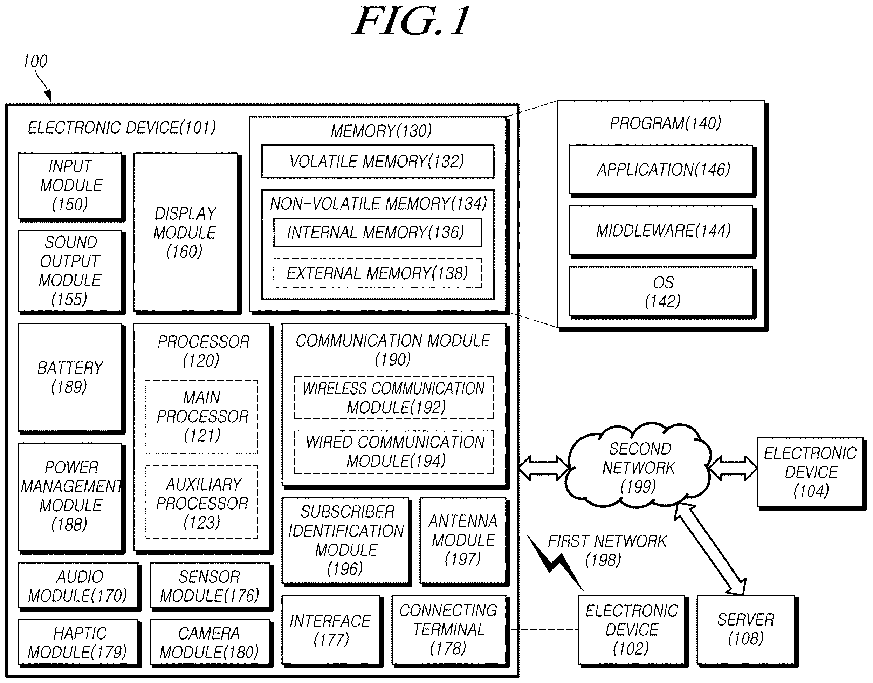

FIG. 1 is a block diagram of an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high-definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to address, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to an embodiment, the antenna module 197 may be a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra-low latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

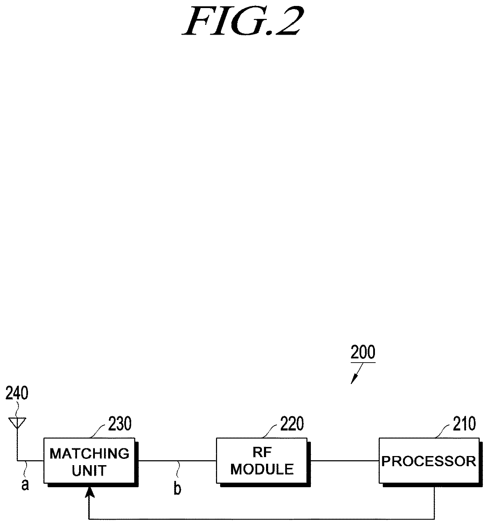

FIG. 2 is a block diagram 200 for antenna matching in an electronic device 101 for supporting wireless communication, according to an embodiment.

Referring to FIG. 2, the electronic device 101 according to an embodiment may include a processor 210, a radio frequency (RF) module 220, a matching unit 230, and an antenna (or antenna radiator) 240. In the following description, a signal transmission line, in which the matching unit 230 may be disposed, electrically connecting the RF module 220 and the antenna 240 will be referred to as a "feed (or feeding) line". The feed line may have a certain characteristic impedance.

According to an embodiment, the processor 210 may perform an overall control to transmit or receive an RF signal through a wireless channel. The processor 210 may provide the RF module 220 with a baseband signal (hereinafter, referred to as a "BB signal") desired to be transmitted. The processor 210 may perform a processing of reception for the BB signal received through the RF module 220. The processor 210 may perform a control for impedance matching of the antenna, based on at least one element to be considered to perform the wireless communication, such as, e.g., a frequency band and/or a communication scheme to be used for transmission/reception. The impedance matching of the antenna may control, for example, the matching unit 230 to form an adaptive antenna matching topology for impedance matching between the antenna 240 and the feeding line.

According to an embodiment, the RF module 220 may receive a baseband signal (hereinafter, referred to as a "BB signal") desired to be transmitted, from the processor 210, up-convert the received BB signal into an RF band signal (hereinafter, referred to as an "RF signal") using an element such as e.g., a mixer (not shown), and thus, provide the RF band signal to the antenna 240 through the matching unit 230 disposed on the feed line. The RF module 220 may receive an RF signal from the antenna 240 through the matching unit 230 disposed on the feed line, up-convert the received RF signal into a BB signal using an element such as a mixer, and thus, provide the up-converted frequency of RF signal to the antenna 240 through the matching unit 230 disposed on the feed line. The RF module 220 may include, for example, at least one RFIC including a front end module (FEM), or may include a separated FEM and RFIC.

According to an embodiment, the matching unit 230 may include a circuit for providing impedance matching between the antenna 240 and the transmission line in between the antenna 240 and the RF module 220. The matching unit 230 may provide, for example, an antenna matching topology to be applied in wireless communication under the control of the processor 210. The matching unit 230 may be electrically connected to the antenna 240 at a terminal (a) corresponding to a feeding point located on the transmission line, and may be electrically connected to the RF module 220 at a terminal (b) located on the transmission line. The matching unit 230 may form a plurality of paths electrically connecting the terminal (a) and the terminal (b) in parallel. The plurality of paths that may be formed by the matching unit 230 may include, for example, a main path (or a primary path) and one or more matching paths (or an auxiliary path). While the matching unit 230 is illustrated as having a separate independent configuration, it may be configured to be included in the RF module 220. For example, the matching unit 230 may be provided in the RFIC included in the RF module 220 or may be provided in the FEM included in the RF module 220.

According to an embodiment, the antenna 240 may transmit an RF signal to a wireless network, or may receive an RF signal from a wireless network. An application type of the antenna 240 may be determined based on factors such as e.g., an available frequency band, a transmission/reception scheme and performance, transmission characteristics or the like. The antenna 240 may include, for example, a dipole antenna, a monopole antenna, a yagi antenna, a patch antenna, a horn antenna, a parabolic antenna, a helical antenna, a slot antenna or the like. For example, the patch antenna may be made by forming a metal pattern in a square or circular shape on a microstrip substrate. The antenna 240 may be an antenna radiator for radiating an RF signal.

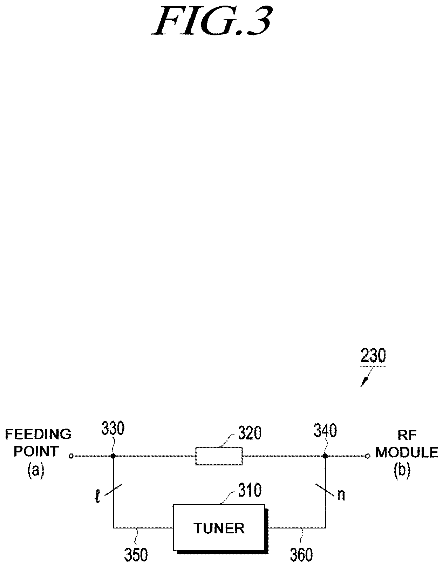

FIG. 3 illustrates an embodiment of the structure of the matching unit 230 described with reference to FIG. 2.

Referring to FIG. 3, the matching unit 230 according to an embodiment may include a lumped element 320 and a tuner 310. The lumped element 320 may include a passive element such as a resistor (R), an inductor (L), or a condenser (C), or a combination of those passive elements. The lumped element 320 included in the matching unit 230 may be, for example, a capacitor having a predetermined capacitance. The tuner 310 may perform impedance matching for improving energy transfer performance such as an RF signal between the feed line, which is a signal transmission line, and the antenna, in consideration of the lumped element 320. The tuner 310 may provide various antenna matching topologies for impedance matching of the antenna, thereby providing the antenna with diversified characteristics and improved performance.

According to an embodiment, the matching unit 230 may include a plurality of paths connected in parallel between the terminal (a) corresponding to the feeding point that electrically connects the feeding line with the antenna radiator (e.g., the antenna 240 in FIG. 2) and the terminal (b) that electrically connects the feeding line with the RF module (e.g., the RF module 220 in FIG. 2). Each of the plurality of paths connecting the terminal (a) and the terminal (b) in parallel may be a feed line, which is an independent transmission line of an RF signal. The plurality of paths may include, for example, a first path (e.g., a main path or a primary path) and one or more second paths (e.g., a matching path or an auxiliary path). The lumped element 320 may be disposed in the first path. The tuner 310 may be disposed in one or more second paths. A first point 330 and a second point 340 indicate positions where the first path and the one or more second paths branch. The first point 330 may be positioned between the lumped element 320 and the terminal (a) (feeding point) connecting the antenna radiator and the feed line. The second point 340 may be positioned between the lumped element 320 and the terminal (b) connecting the RF module and the feed line.

According to an embodiment, the one or more second paths may be divided into a section 2-1 (350) electrically connecting the first point 330 and the tuner 310, and a section 2-2 (360) electrically connecting the second point 340 and the tuner 310. The number (*l*) of second paths in the section 2-1 (350) electrically connecting the first point 330 and the tuner 310 may be the same as or different from the number (n) of second paths in section 2-2 (360) electrically connecting the second point 340 and the tuner 310. The number (*l*) of second paths in the section 2-1 (350) and the number (n) of second paths in the section 2-2 (360) may be a positive integer.

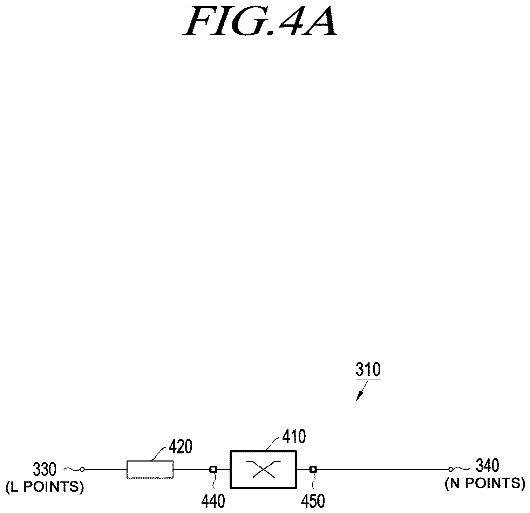

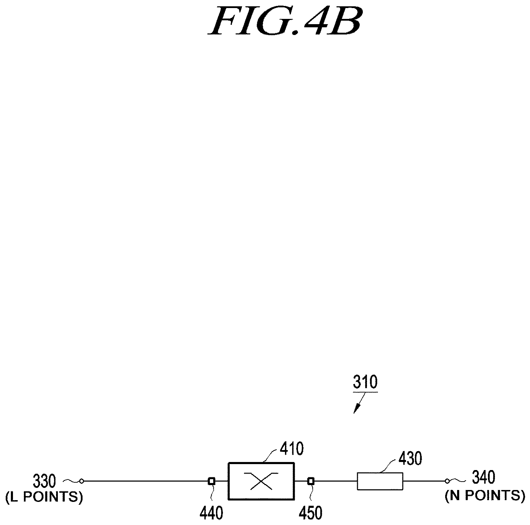

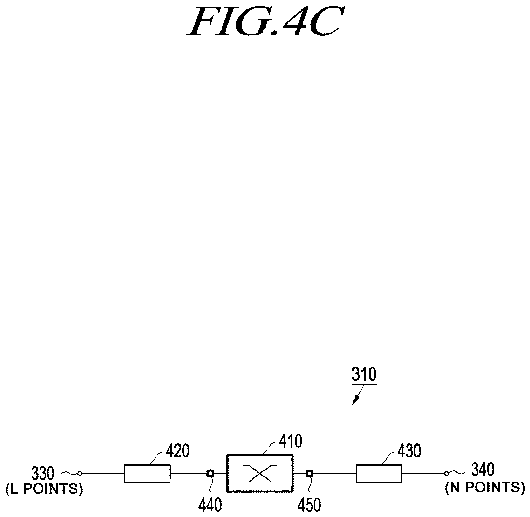

According to an embodiment, within the tuner 310, the lumped element may or may not be disposed in at least one of *l* second paths present in the section 2-1 (350), or the lumped element may or may not be disposed in at least one of *n* second paths present in the section 2-2 (360). The tuner 310 may have, for example, any one of the structures shown in FIG. 4A, FIG. 4B, or FIG. 4C to be described below in more detail.

FIGS. 4A to 4C illustrate examples of the structure of the tuner 310 described with reference to FIG. 3. The structure of the tuner 310 illustrated in FIGS. 4A to 4C may be classified based on an arrangement of at least one lumped element. FIGS. 4A and 4B each illustrate an example of a structure of the tuner 310 in which one lumped element is disposed, and FIG. 4C illustrates an example of a structure of the tuner 310 in which two lumped elements are disposed.

Referring to FIGS. 4A to 4C, the tuner 310 according to an embodiment may include at least one lumped element 420 or 430 and a switch circuit 410. The at least one lumped element 420 or 430 and the switch circuit 410 may be disposed in series between a first point (e.g., the first point 330 of FIG. 3) and a second point (e.g., the second point 340 of FIG. 3). Since FIG. 3 illustrates that the tuner 310 is connected in parallel to the feed line, it may be seen that the switch circuit 410 is also disposed in parallel with respect to the feed line. The at least one lumped element 420 or 430 may include, for example, a passive element (e.g., a resistor R, an inductor L, or a capacitor C) or a combination of these passive elements. The at least one lumped element 420 or 430 may include, for example, a capacitor having a predetermined capacitance or an inductor having a predetermined inductance.

According to an embodiment, the switch circuit 410 may form impedance matching topologies of various antennas to improve energy transfer performance such as e.g., an RF signal between the feeding line and the antenna in consideration of the at least one lumped element 420 or 430. The various impedance matching topologies may provide multi-paths (e.g., matching paths) electrically connecting between the first point 330 and the second point 340. The switch circuit 410 may include at least two terminals 440 and 450. At least one of the at least two terminals 440 and 450 included in the switch circuit 410 may be used as an input terminal, and the other one of the at least two terminals may be used as an output terminal. For example, in case that the switch circuit 410 includes the first terminal 440 and the second terminal 450, upon transmitting an RF signal, the first terminal 440 may be used as an output terminal, and the second terminal 450 may be used as an input terminal. As another example, in case that the switch circuit 410 includes the first terminal 440 and the second terminal 450, upon receiving an RF signal, the first terminal 440 may be used as an input terminal, and the second terminal 450 may be used as an output terminal.

According to an embodiment, a switch element applicable as the switch circuit 410 may include, for example, a single pole double throw (SPDT), a single pole three throw (SP3T), a single pole four throw (SP4T), a single pole five throw (SP5T), a single pole six throw (SP6T), or a double pole double throw (DPDT). The switch circuit 410 may include, for example, a switch element made of one component including a plurality of switches. For example, the switch circuit 410 of the remaining types (e.g., SP3T, SP4T, SP5T, SP6T, or DPDT) other than the SPST type may have at least one pole terminal or at least two throw terminals.

According to an embodiment, the pole terminal in the switch circuit 410 may be used as a radio frequency common (RFC) terminal that may be connected to a transmission line (a feed line) through which wireless signals are transmitted and received. However, the pole terminal may be opened so that the parasitic resonance is not output to the antenna radiator, thereby preventing presence of the lumped element physically connected to the ground. At least one of the at least two throw terminals in the switch circuit 410 may be electrically connected to a connection point (e.g., at least one first point 330) between a terminal (a) (e.g., a feeding point (a) connecting the antenna 240 and the matching unit 230 of FIG. 2) and a lumped element (e.g., the lumped element 320 of FIG. 3). The remaining one of the at least two throw terminals in the switch circuit 410 may be connected to a connection point (e.g., at least one second point 340) between the terminal (b) (e.g., the terminal (b) connecting the matching unit 230 and the RF module 220 of FIG. 2) and the lumped element 320.

According to an embodiment, the type of the switch circuit 410 may be determined based on the number (*l*) of second paths present in the section 2-1 connecting the first point 330 and the tuner 310, and the number (*n*) of second paths present in the section 2-2 connecting the second point 340 and the tuner 310. For example, when both *l* and *n* are "1", the switch circuit 410 may be a switch element of a type (e.g., SPDT, SP4T, SP5T, SP6T) including two or more terminals. As another example, when both *l* and *n* are "2", the switch circuit 410 may be a switch element of a type (e.g., SP4T, SP5T, SP6T, DPDT) including four or more terminals. As another example, when *l* is "2" and *n* is "3", the switch circuit 410 may be a switch element of a type (e.g., SPST or SP6T) including five or more terminals.

As described above, the terminals (e.g., the throw terminals) of the switch circuit 410 are electrically connected to the feeding line, and any one (e.g., the pole terminal) of the terminals of the switch circuit 410 is made to be opened, so that there exists no lumped element physically connected to the ground. Such a switching circuit 410 may allow only internal capacitance to exist, thereby preventing parasitic resonance due to shunt matching from occurring in a frequency band of 6 GHz or less.

FIG. 4A illustrates an example of the structure of the tuner 310 described with reference to FIG. 3.

Referring to FIG. 4A, the tuner 310 according to an embodiment may include a first lumped element 420 and a switch circuit 410 disposed to electrically connect a first point (e.g., the first point 330 of FIG. 3) and a second point (e.g., the second point 340 of FIG. 3). The first lumped element 420 may be disposed between the first point 330 and the first terminal 440 of the switch circuit 410. A lumped element may not be disposed between the second terminal 450 of the switch circuit 410 and the second point 340.

According to an embodiment, the first lumped element 420 may be disposed in *l* second paths in the section 2-1 (350) connecting the first point 330 and the first terminal 440 of the switch circuit 410 included in the tuner 310. For example, when *l* is "2", the first lumped element 420 may be disposed in each of the two second paths present in the section 2-1 (350), or may be disposed in only one of the two second paths. In an embodiment, when the first lumped element 420 is disposed in each of two second paths existing in the section 2-1 (350), the first lumped elements 420 disposed in each path may be the same as or different from each other.

FIG. 4B illustrates another example of the structure of the tuner 310 described with reference to FIG. 3.

Referring to FIG. 4B, the tuner 310 according to an embodiment may include a switch circuit 410 and a second lumped element 430 disposed to electrically connect the first point 330 and the second point 340. The second lumped element 430 may be disposed between the second terminal 450 of the switch circuit 410 and the second point 340. Any lumped element may not be disposed between the first point 330 and the first terminal 440 of the switch circuit 410.

According to an embodiment, the second lumped element 430 may be disposed in n second paths in the section 2-2 (360) connecting the second terminal 450 of the switch circuit 410 included in the tuner 310 and the first point 330. For example, when n is "2", the second lumped element 430 may be disposed on each of the two second paths present in the section 2-2 (360), or may be disposed on only one of the two second paths. In an embodiment, when the second lumped elements 430 are disposed in the two second paths existing in the section 2-2 (360), respectively, the second lumped elements 430 disposed in the respective paths may be substantially the same as or different from each other.

FIG. 4C illustrates another example of the structure of the tuner 310 described with reference to FIG. 3.

Referring to FIG. 4C, the tuner 310 according to an embodiment may include a first lumped element 420, a switch circuit 410, and a second lumped element 430 disposed to electrically connect between the first point 330 and the second point 340. The first lumped element 420 may be disposed between the first point 330 and the first terminal 440 of the switch circuit 410, and the second lumped element 430 may be disposed between the second terminal 450 of the switch circuit 410 and the second point 340.

According to an embodiment, the first lumped element 420 may be disposed in *l* second paths in the section 2-1 (350) connecting the first point 330 and the first terminal 440 of the switch circuit 410 included in the tuner 310. For example, when *l* is "2", the first lumped element 420 may be disposed in each of the two second paths existing in section 2-1 (350), or may be disposed in only one of the two second paths.

According to an embodiment, the second lumped element 430 may be disposed in n second paths in the section 2-2 (360) connecting the second terminal 450 of the switch circuit 410 included in the tuner 310 and the first point 330. For example, when n is "2", the second lumped element 430 may be disposed in each of the two second paths existing in the section 2-2 (360), or may be disposed on only one of the two second paths.

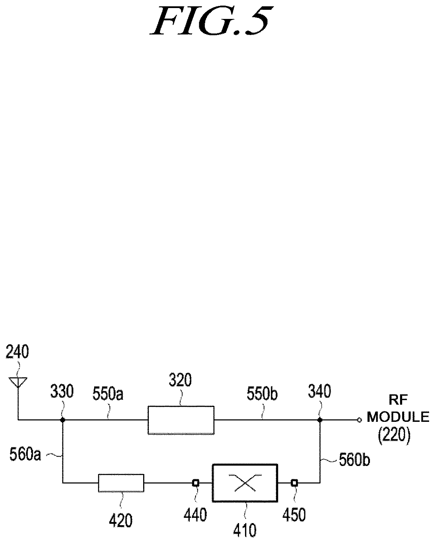

FIG. 5 illustrates an embodiment in which the structure described with reference to FIGS. 3 and 4A is applied to the matching unit 230 described with reference to FIG. 2.

Referring to FIG. 5, an electronic device (e.g., the electronic device 101 of FIG. 1) according to an embodiment may include an antenna (or antenna radiator) (e.g., the antenna 240 of FIG. 2), an RF module (or RFIC) (e.g., the RF module 220 of FIG. 2), a first element (e.g., the lumped element 320 of FIG. 3), a second element (e.g., the first lumped element 420 of FIG. 4A), or a switch circuit (e.g., the switch circuit 410 of FIG. 4A) for impedance matching of an antenna.

According to an embodiment, the first element 320 may be positioned on a first path that electrically connects the antenna 240 and the RF module 220. The first element 320 may include a lumped element. The lumped element to be included in the first element 320 may be a passive element such as a resistor R, an inductor L, or a capacitor C, or a combination of those passive elements. The first path may include a first section 550a electrically connecting the antenna 240 and the first element 320, and a second section 550b electrically connecting the first element 320 and the RF module 220. A first point (e.g., the first point 330 of FIG. 3) may be located in the first section 550a, and a second point (e.g., the second point 340 of FIG. 3) may be located in the second section 550b.

According to an embodiment, the second element 420 and the switch circuit 410 may be disposed in series in a second path (matching path) connecting the first point 330 and the second point 340. The second path may include a third section 560a electrically connecting the first point 330 and the switch circuit 410 through the second element 420, and a fourth section 560b electrically connecting the switch circuit 410 and the second point 340. A lumped element to be included in the second element 420 may be a passive element such as a resistor R, an inductor L, or a capacitor C, or a combination of those passive elements.

According to an embodiment, the switch circuit 410 may operate with a control signal from a processor (e.g., the processor 210 of FIG. 2). The switch circuit 410 may include at least two terminals 440 and 450. A first terminal (e.g., the first terminal 440 of FIG. 4A) included in the switch circuit 410 may be electrically connected to the first point 330 via the second element 420. A second terminal (e.g., the second terminal 450 of FIG. 4A) included in the switch circuit 410 may be electrically connected to the second point 340 located on the first path. The switch circuit 410 may further include an open third terminal (not shown). The third terminal that may be included in the switch circuit 410 may be an input/output common terminal (RFC terminal) (e.g., a "pole terminal") that may be electrically connected to a first path through which an RF signal is transmitted. In this case, the RFC terminal may be opened so that no lumped element physically connected to the ground is present.

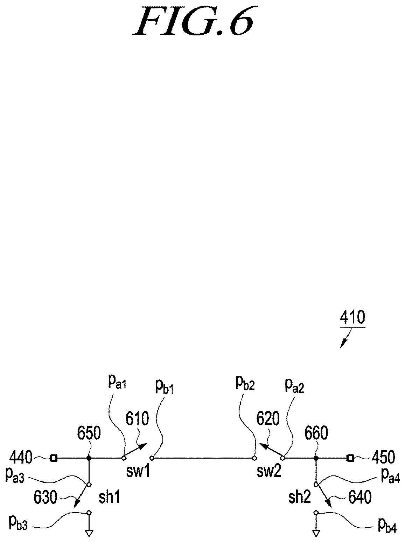

FIG. 6 illustrates an example of the structure of the switch circuit 410 described with reference to FIGS. 4A to 4C. In FIG. 6, it is assumed that the number *l* of the second paths in the section 2-1 (e.g., the third section 560a of FIG. 5) between the first point 330 and the switch circuit 410, and the number n of the second paths in the section 2-2 (e.g., the fourth section 560b of FIG. 5) between the switch circuit 410 and the second point 340 are all '1'.

Referring to FIG. 6, the switch circuit 410 according to an embodiment may include two switches sw1 and sw2 (610, 620) and two stoppers sh1 and sh2 (630, 640). The stoppers sh1 and sh2 (630, 640) included in the switch circuit 410 may be one type of switch. The switch circuit 410 may include at least two terminals.

According to an embodiment, the switch circuit 410 may include one pole terminal (not shown) and a plurality of throw terminals. The one pole terminal may be open or short-circuited. In case that the one pole terminal is opened, the tuner (e.g., the tuner 310 of FIG. 3) may have a structure in which no lumped element physically connected to the ground exists. Although not illustrated herein, the pole terminal of the switch circuit 410 may be installed at any point between the second terminal p_{b1} of the first switch sw1 (610) and the second terminal p_{b2} of the second switch sw2 (620).

According to an embodiment, the first switch sw1 (610) and the second switch sw2 (620) may be connected in series between the first terminal 440 and the second terminal 450. The first switch sw1 (610) may have a (1-1)th terminal pₐ₁ and a (1-2)th terminal p_{b1}, and may electrically connect or disconnect the (1-1)th terminal pₐ₁ to or from the (1-2)th terminal p_{b1}. The second switch sw2 (620) may have a (2-1)th terminal pₐ₂ and a (2-2)th terminal p_{b2}, and may electrically connect or disconnect the (2-1)th terminal pₐ₂ to or from the (2-2)th terminal p_{b2}. The (1-1)th terminal pₐ₁ of the first switch sw1 (610) may be connected to the first terminal 440, and the (1-2)th terminal p_{b1} of the first switch sw1 (610) may be connected to the (2-2)th terminal p_{b2} of the second switch sw2 (620). The (2-1)th terminal pₐ₂ of the second switch sw2 (620) may be connected to the second terminal 450, and the (2-2)th terminal p_{b2} of the second switch sw2 (620) may be connected to the (1-2)th terminal p_{b1} of the first switch sw1 (610).

According to an embodiment, the first stopper sh1 (630) may be disposed between a point 650 between the first terminal 440 and the (1-1)th terminal pₐ₁ of the first switch sw1 (610), and a ground. The second stopper sh2 (640) may be disposed between a point 660 between the second terminal 450 and the (2-1)th terminal pₐ₂ of the second switch sw2 (620), and the ground. The first stopper sh1 (630) may have a (3-1)th terminal p_{b3} and a (3-2)th terminal p_{b3}, and may electrically connect or disconnect the (3-1)th terminal pa3 to or from the (3-2)th terminal p_{b3}. The second stopper sh2 (640) may have a (4-1)th terminal pₐ₄ and a (4-2)th terminal p_{b4}, and may electrically connect or disconnect the (4-1)th terminal pₐ₄ to or from the (4-2)th terminal p_{b4}. The (3-1)th terminal pₐ₃ of the first stopper sh1 (630) may be connected to a point 650, and the (3-2)th terminal p_{b3} of the first stopper sh1 (630) may be connected to the ground. The (4-1)th terminal pₐ₄ of the second stopper sh2 (640) may be connected to a point 660, and the (4-2)th terminal p_{b4} of the second stopper sh2 (640) may be connected to the ground.

According to an embodiment, the two switches sw1 and sw2 (610, 620) and the two stoppers sh1 and sh2 (630, 640) included in the switch circuit 410 may be opened (off) or shorted (on) under control of an external device (e.g., the processor 210 of FIG. 2). Accordingly, the switch circuit 410 may provide a plurality of antenna matching topologies by a combination of on or off of each of the switches sw1 and sw2 (610, 620) and/or the stoppers sh1 and sh2 (630, 640). For example, when only the first stopper sh1 630 is turned on, the switch circuit 410 may operate as a matching circuit formed of a lumped element (e.g., the lumped element 320 of FIG. 3) disposed on the feeding line and a lumped element (e.g., the first lumped element 420 of FIGS. 4A and 4C) included in the tuner. As another example, when only the second stopper sh2 (640) is turned on, the switch circuit 410 may operate as a matching circuit formed of a lumped element (e.g., the lumped element 320 of FIG. 3) disposed on the feeding line and a lumped element (e.g., the second lumped element 430 of FIGS. 4B and 4C) included in the tuner. As another example, when all of the switches (sw1, sw2 610, 620) are turned on, the switch circuit 410 may operate as a two-stage parallel circuit formed of a lumped element (e.g., the lumped element 320 of FIG. 3) disposed on the feeding line and lumped elements (e.g., the first lumped element 420 of FIGS. 4A and 4C and the second lumped element 430 of FIGS. 4B and 4C) included in a tuner. As another example, when all of the switches sw1 and sw2 (610, 620) and the stoppers sh1 and sh2 (630, 640) are turned on, the switch circuit 410 may operate as a matching circuit formed of a lumped element (e.g., the lumped element 320 of FIG. 3) disposed on the feeding line and lumped elements (e.g., the first lumped element 420 of FIGS. 4A and 4C and the second lumped element 430 of FIGS. 4B and 4C) included in the tuner.

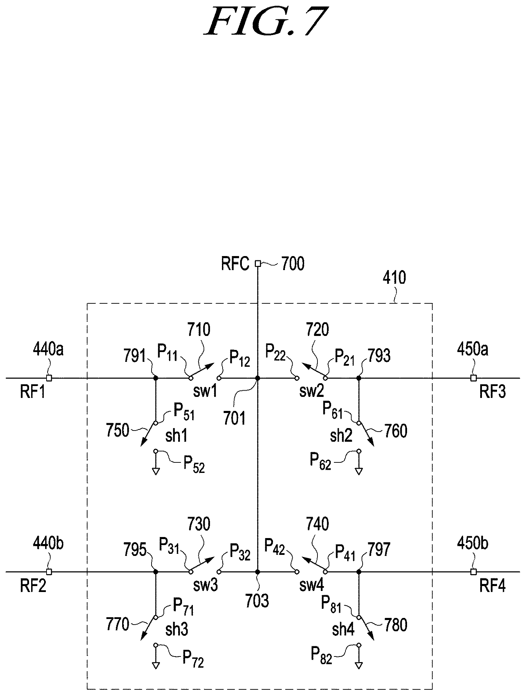

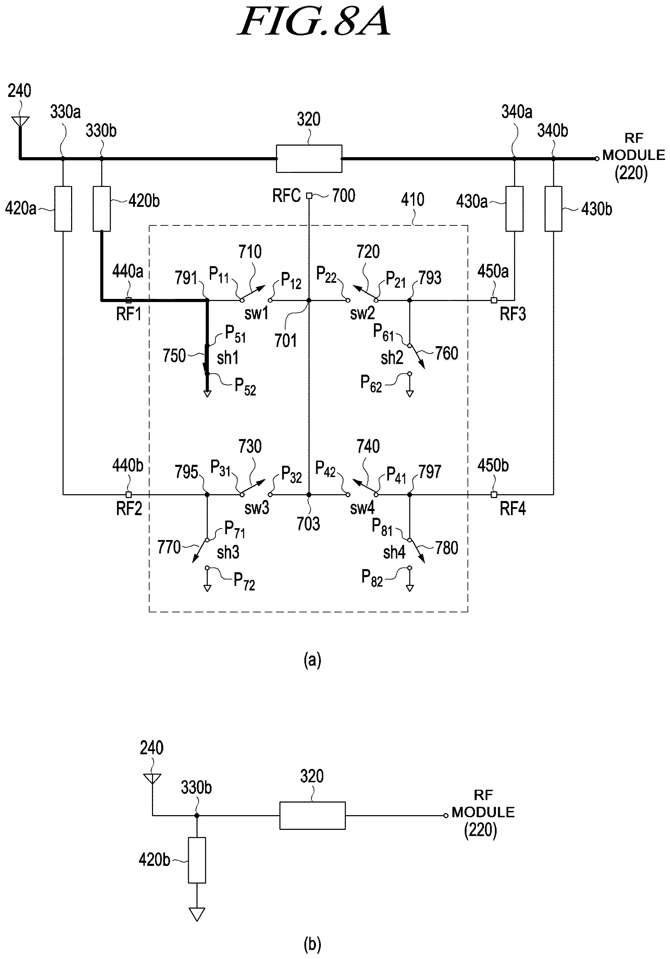

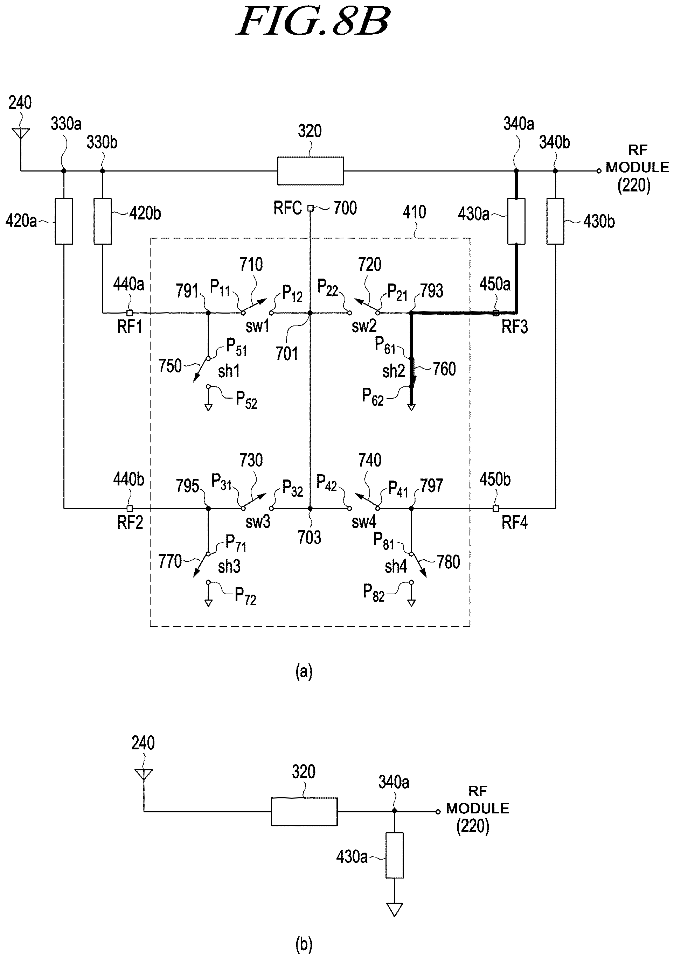

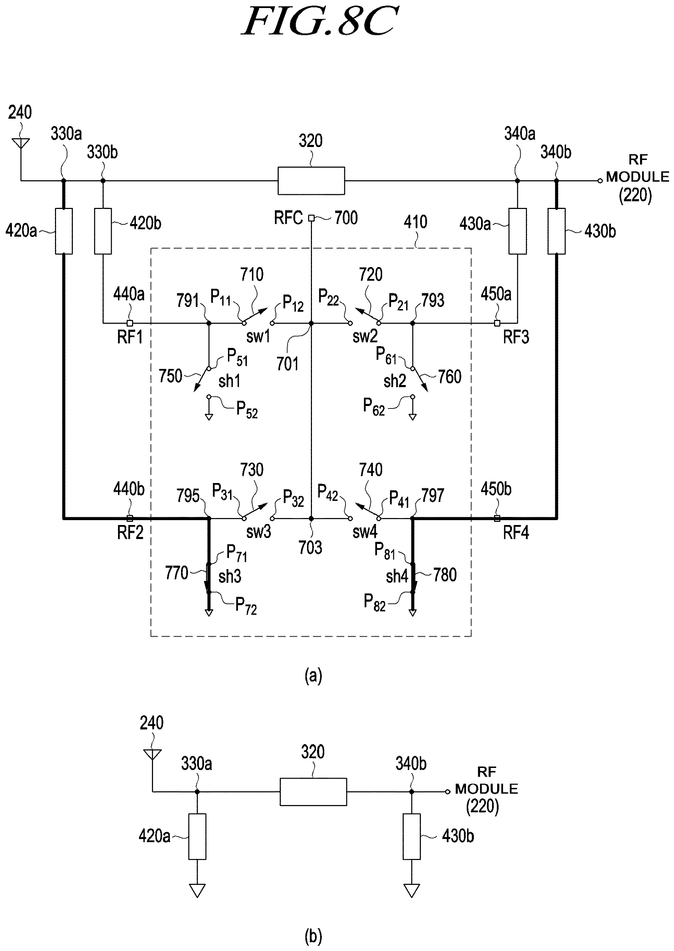

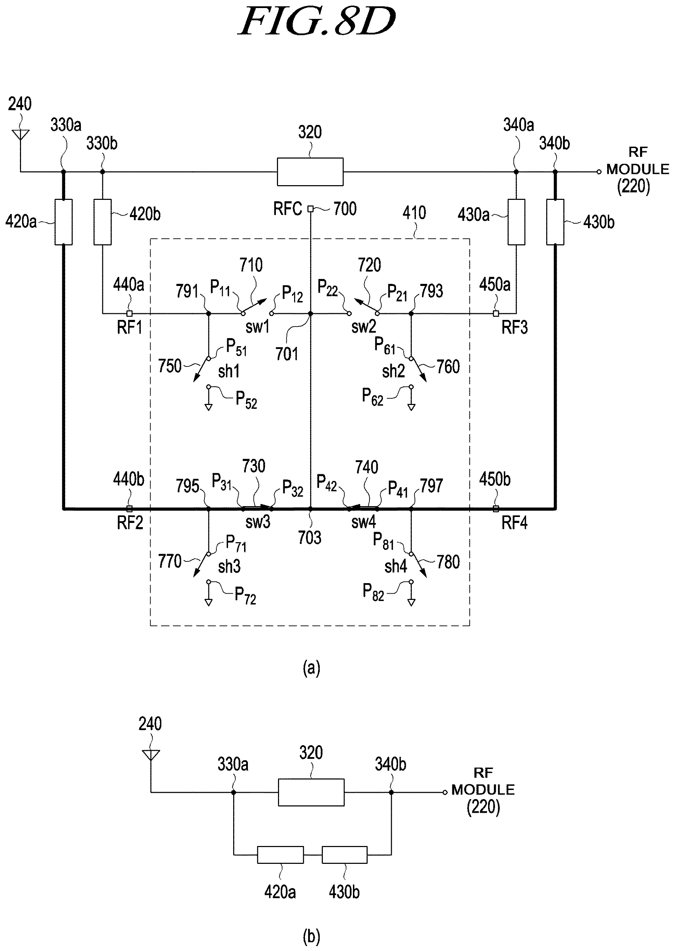

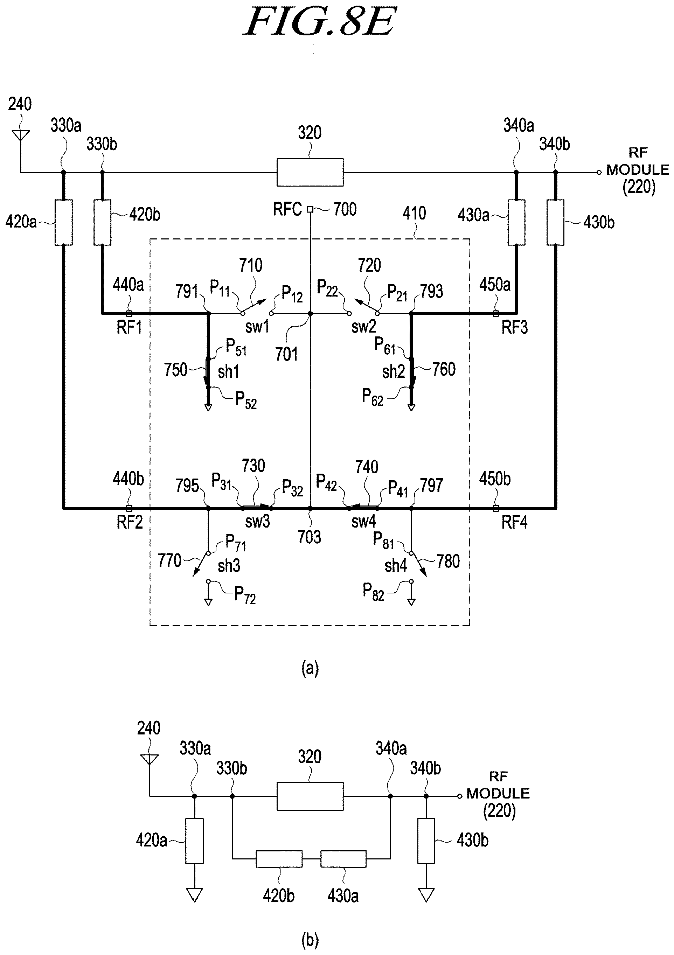

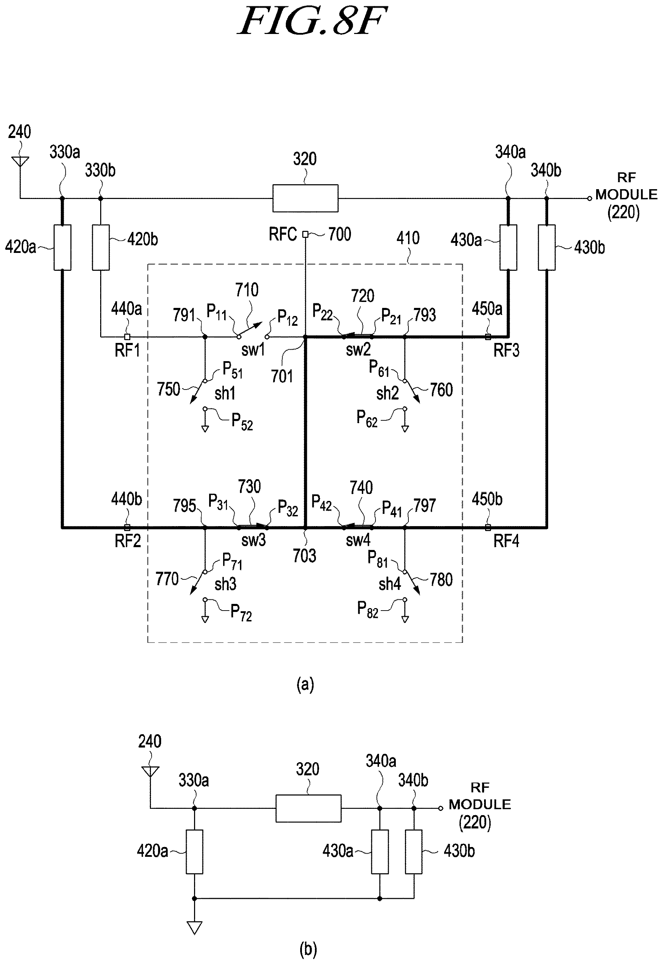

FIG. 7 illustrates an example of the structure of the switch circuit 410 described with reference to FIGS. 4A to 4C. In FIG. 8, it is assumed that the number *l* of the second paths in the section 2-1 (e.g., the third section 560a of FIG. 5) between the first point 330 and the switch circuit 410, and the number n of the second paths in the section 2-2 (e.g., the fourth section 560b of FIG. 5) between the switch circuit 410 and the second point 340 are all '2'.

Referring to FIG. 7, the switch circuit 410 according to an embodiment may include two first terminals RF1 and RF2 (440a, 440b) and two second terminals RF3 and RF4 (450a, 450b). For convenience of description, the two first terminals RF1 and RF2 (440a, 440b) are referred to as an RF1 terminal 440a and an RF2 terminal 440b, respectively, and the two second terminals RF3 and RF4 (450a, 450b) are referred to as an RF3 terminal 450a and an RF4 terminal 450b, respectively. The switch circuit 410 may form various antenna matching topologies for improving energy transfer performance such as an RF signal between a feeding line and an antenna. For example, the various antenna matching topologies may provide a multipath.

According to an embodiment, the switch circuit 410 may be an SP4T type of including at least one pole terminal RFC (700) and at least four throw terminals RF1, RF2, RF3, and RF4 (440a, 440b, 450a, 450b). The one pole terminal 700 may be opened (or turned off) or shorted-circuited (or turned on). The four throw terminals (440a, 440b, 450a, 450b) may be connected to the feeding line. The SP4T type of switch circuit 410 may include four switches (sw1, sw2, sw3, sw4) (710, 720, 730, 740) and four stoppers (sh1, sh2, sh3, sh4) (750, 760, 770, 780).

According to an embodiment, the first switch sw1 710 and the second switch sw2 720 may be connected in series between the RF1 terminal 440a and the RF3 terminal 450a in the switch circuit 410. The first switch sw1 710 may have a first terminal p₁₁ and a second terminal p₁₂, and may electrically connect or disconnect the first terminal p₁₁ to or from the second terminal p₁₂. The second switch sw2 720 may have a first terminal p₂₁ and a second terminal p₂₂, and may electrically connect or disconnect the first terminal p₂₁ to or from the second terminal p₂₂. The third switch sw3 730 may have a first terminal p₃₁ and a second terminal p₃₂, and may electrically connect or disconnect the first terminal p₃₁ to or from the second terminal p₃₂. The fourth switch sw4 740 may have a first terminal p₄₁ and a second terminal p₄₂, and may electrically connect or disconnect the first terminal p₄₁ to or from the second terminal p₄₂.

According to an embodiment, the first terminal p₁₁ of the first switch sw1 710 may be connected to the RF1 terminal 440a, and the second terminal p₁₂ of the first switch sw1 710 may be connected to the second terminal p₂₂ of the second switch sw2 720. The first terminal p₂₁ of the second switch sw2 720 may be connected to the RF3 terminal 450a, and the second terminal p₂₂ of the second switch sw2 720 may be connected to the second terminal p₁₂ of the first switch sw1 710. The first terminal p₃₁ of the third switch sw3 730 may be connected to the RF2 terminal 440b, and the second terminal p₃₂ of the third switch sw3 730 may be connected to the second terminal p₄₂ of the fourth switch sw4 740. The first terminal p₄₁ of the fourth switch sw4 740 may be connected to the RF4 terminal 450b, and the second terminal p₄₂ of the fourth switch sw4 740 may be connected to the second terminal p₃₂ of the third switch sw3 730.

According to an embodiment, the first stopper sh1 750 may be disposed between a point 791 between the RF1 terminal 440a and the first terminal p₁₁ of the first switch sw1 710, and the a ground. The second stopper sh2 750 may be disposed between a point 793 between the RF3 terminal 450a and the first terminal p₂₁ of the second switch sw2 720, and the ground. The third stopper sh3 770 may be disposed between a point 795 between the RF2 terminal 440b and the first terminal p₃₁ of the third switch sw3 730, and the ground. The fourth stopper sh4 780 may be disposed between a point 797 between the RF4 terminal 450b and the first terminal p₄₁ of the fourth switch sw4 740, and the ground.

According to an embodiment, the first stopper sh1 750 may have a first terminal p₅₁ and a second terminal p₅₂, and may electrically connect or disconnect the first terminal p₅₁ to or from the second terminal p₅₂. The second stopper sh2 760 may have a first terminal p₆₁ and a second terminal p₆₂, and may electrically connect or disconnect the first terminal p₆₁ to or from the second terminal p₆₂. The third stopper sh3 770 may have a first terminal p₇₁ and a second terminal p₇₂, and may electrically connect or disconnect the first terminal p₇₁ to or from the second terminal p₇₂. The fourth stopper sh4 780 may have a first terminal psi and a second terminal p⁸², and may electrically connect or disconnect the first terminal p₈₁ to or from the second terminal p₈₂.

According to an embodiment, the first terminal p₅₁ of the first stopper sh1 750 may be connected to a point 791, and the second terminal p₅₂ of the first stopper sh1 750 may be connected to the ground. A first terminal p₆₁ of the second stopper sh2 760 may be connected to a point 793, and a second terminal p₆₂ of the second stopper sh2 760 may be connected to the ground. The first terminal p₇₁ of the third stopper sh3 770 may be connected to a point 795, and the second terminal p₇₂ of the third stopper sh3 770 may be connected to the ground. The first terminal p₈₁ of the fourth stopper sh4 780 may be connected to a point 797, and the second terminal p₈₂ of the fourth stopper sh4 780 may be connected to the ground.

According to an embodiment, the pole terminal 700 that may be included in the switch circuit 410 may be connected to a point 701 between the second terminal p₁₂ of the first switch sw1 710 and the second terminal p₂₂ of the second switch sw2 720 and a point 703 between the second terminal p₃₂ of the third switch sw3 730 and the second terminal p₄₂ of the fourth switch sw4 740. The point 701 and the point 703 may be connected to each other.

According to an embodiment, the four switches (sw1, sw2, sw3, sw4) (710, 720, 730, 740) and the four stoppers (sh1, sh2, sh3, sh4) (750, 760, 770, 780) included in the switch circuit 410 may be opened (or turned off) or shorted (or turned on) under control of an external device (e.g., the processor 210 of FIG. 2). Accordingly, the switch circuit 410 may provide impedance matching topologies of various antennas by means of a combination of on or off of each of the switches (sw1, sw2, sw3, sw4) (710, 720, 730, 740) and/or the stoppers (sh1, sh2, sh3, sh4) (750, 760, 770, 780). For example, when the switches (sw1, sw2, sw3, sw4) (710, 720, 730, 740) included in the switch circuit 410 are turned on, each of the switches (sw1, sw2, sw3, sw4) (710, 720, 730, 740) may have a certain level of capacitance. In this case, the switch circuit 410 may operate as an LC resonance circuit by an induction coefficient between each terminal and the ground and a capacitance of the switches (sw1, sw2, sw3, sw4) (710, 720, 730, 740) to generate a parasitic resonance frequency. As another example, by turning off at least one of the stoppers (sh1, sh2, sh3, sh4) (750, 760, 770, 780) included in the switch circuit 410, it is possible to prevent the parasitic resonance from occurring, by blocking the induction between the corresponding terminal and the ground.

As described above, the antenna matching topologies may be variously implemented by a combination of on or off of the switches (sw1, sw2, sw3, sw4) (710, 720, 730, 740) and/or the stoppers (sh1, sh2, sh3, sh4) (750, 760, 770, 780) included in the switch circuit 410.

FIGS. 8A to 8F illustrate various examples of impedance matching topology of an antenna with the structure described with reference to FIGS. 3, 4C, and 7 in the matching unit 230 described with reference to FIG. 2. The antenna matching circuit (a) illustrated in FIGS. 8A to 8F may be described by applying the structure illustrated in FIG. 7 to the switch circuit 410 in FIG. 4C and then replacing the same with the tuner 310 in FIG. 3.

FIG. 8A illustrates an impedance matching topology of an antenna that may be provided when only the first stopper sh1 750 operates in an ON state by a control signal of an external device (e.g., the processor 210 of FIG. 2) (refer to its diagram (a)). In this case, the impedance matching topology of the antenna may have a structure in which one point 330b positioned between the antenna radiator 240 and the lumped element 320 disposed on the feeding line is connected to the ground through another lumped element 420b (refer to its diagram (b)). Although not illustrated herein, the impedance matching topology of the same or similar antenna may be provided even when only a stopper other than the first stopper sh1 750, for example, the third stopper sh3 770, operates in an on state.

FIG. 8B illustrates an impedance matching topology of an antenna that may be provided when only the second stopper sh2 760 operates in an on state, with a control signal of an external device (e.g., the processor 210 of FIG. 2) (refer to its diagram (a)). In this case, the impedance matching topology of the antenna may have a structure in which a point 340a positioned between the lumped element 320 disposed on the feeding line and the RF module 220 is connected to a ground through another lumped element 430a (refer to its diagram (b)). Although not illustrated herein, the impedance matching topology of the same or similar antenna may be provided even when only a stopper other than the second stopper sh2 760, for example, the fourth stopper sh4 780, operates in an on state.

FIG. 8C illustrates an impedance matching topology of an antenna that may be provided when the third and fourth stoppers sh3 and sh4 (770, 780) operate in an on state by a control signal of an external device (e.g., the processor 210 of FIG. 2) (see its diagram (a)). In this case, the impedance matching topology of the antenna may have a structure in which one point 330a positioned between the antenna radiator 240 and the lumped element 320 disposed in the feeding line, and another point 340b positioned between the lumped element 320 disposed on the feeding line and the RF module 220 are respectively connected to the ground through the other lumped elements 420a and 430b (see its diagram (b)). Although not illustrated, when a combination of one of the first stopper sh1 750 or the third stopper sh3 770 and one of the second stopper sh2 760 or the fourth stopper sh4 780 operates in an on state, a structure identical or similar to the impedance matching topology of the antenna illustrated in FIG. 8C may be provided.

FIG. 8D illustrates an impedance matching topology of an antenna that may be provided when the third and fourth switches sw3 and sw4 (730, 740) operate in an on state by a control signal of an external device (e.g., the processor 210 of FIG. 2) (see its diagram (a)). In this case, the impedance matching topology of the antenna may have a structure in which one point 330a positioned between the antenna radiator 240 and the lumped element 320 disposed on the feeding line and another point 340b positioned between the lumped element 320 disposed on the feeding line and the RF module 220 are connected through the other lumped elements 420a and 430b (see its diagram (b)). Although not illustrated herein, the impedance matching topology of a similar or identical antenna may be provided even when a switch other than the third and fourth switches sw3 and sw4 (730, 740), for example, the first and second switches sw1 and sw2 (710, 720) operates in an on state.

FIG. 8E illustrates an impedance matching topology of an antenna that may be provided when first and second stoppers sh1 and sh2 (750, 760) and the third and fourth switches sw3 and sw4 (730, 740) operate in an on state by a control signal of an external device (e.g., the processor 210 of FIG. 2) (see its diagram (a)). In this case, the impedance matching topology of the antenna may have a structure in which the first point 330b and the second point 340a on the feed line are connected to the ground through different lumped elements 420b and 430a, respectively, and the third point 330a and the fourth point 340b on the feed line are connected through different lumped elements 420a and 430b (see its diagram (b)). Here, the first and third points 330b and 330a may be points located between the antenna radiator 240 and the lumped element 320 disposed on the feeding line, and the second and fourth points 340a and 340b may be points located between the lumped element 320 disposed on the feeding line and the RF module 220. Although not illustrated herein, the impedance matching topology of the similar or identical antenna may be provided even when the third stopper sh3 770 and the fourth stopper sh4 780 operate in the on state in place of the first stopper Sh1 750 and the second stopper Sh2 760, and the first switch sw1 710 and the second switch sw2 720 operate in the on state in place of the third switch sw3 730 and the fourth switch sw4 740.

FIG. 8F illustrates an impedance matching topology of an antenna that may be provided when the third and fourth switches sw3 and sw4 (730, 740) and the second switch sw2 720 operate in an on state by a control signal of an external device (e.g., the processor 210 of FIG. 2) (see its diagram (a)). In this case, the impedance matching topology of the antenna may have a structure in which one first point 330a and two second points 340a and 340b are connected in parallel through the other lumped elements (420a, 430a, 430b) in the feeding line (see its diagram (b)). Here, the first point 330a may be a point located between the antenna radiator 240 and the lumped element 320 disposed on the feeding line, and the second points 340a and 340b may be points located between the lumped element 320 disposed on the feeding line and the RF module 220. Although not illustrated, the impedance matching topology of the similar or identical antenna may be provided even when the first switch sw1 710 operates in the on state in place of the third switch sw3 730.

In the above description of FIGS. 8A to 8F, description has been made of only the switch and/or the stopper controlled in an on state. However, one would be able to sufficiently foresee from the illustrated drawings that the remaining switches and/or stoppers, other than the switch and/or the stopper controlled in the on state, should be controlled in the off state.

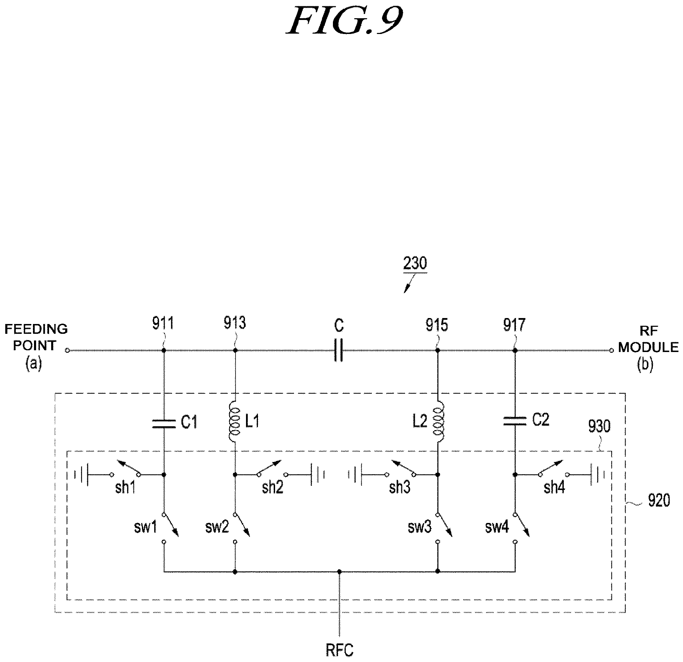

FIG. 9 illustrates an embodiment of a matching unit (e.g., the matching unit 230 of FIG. 2) described with reference to FIG. 2.

Referring to FIG. 9, the matching unit 230 according to an embodiment may include a condenser C, which is a lumped element, and a tuner 920 (e.g., the tuner 310 of FIG. 3). The capacitor C, which is the lumped element, may be disposed on a feeding line electrically connecting a feeding point (a) and the RF module (b). The tuner 920 may be electrically connected to a plurality of points located on the feeding line. The plurality of points may include points a, b, c, and d (911, 913, 915, 917). The tuner 920 may be connected in parallel with the feeding line where the capacitor C is disposed between the feeding point (a) and the RF module (b).

According to an embodiment, the points a and b (e.g., at least one first point 330 of FIG. 3) 911 and 913 included in the plurality of points (911, 913, 915, 917) electrically connected to the tuner 920 in the feeding line may be located between the feeding point (a) and the capacitor C, and the points c and d (e.g., at least one second point 340 of FIG. 3) 915 and 917 included in the plurality of points (911, 913, 915, 917) may be located between the capacitor C and the RF module (b). The plurality of points (911, 913, 915, 917) may be coupled one-to-one to be electrically connected to a plurality of terminals provided in the tuner 920.

According to an embodiment, the tuner 920 may include a plurality of lumped elements (C1, L1, C2, L2) and a switch circuit 930. The plurality of lumped elements may be disposed on a path electrically connecting points (a, b, c, d) (911, 913, 915, 917) located on the feeding line to the switch circuit 930. The capacitors C1 and C2 or inductors L1 and L2 may be used as the plurality of lumped elements. For example, the first capacitor C1 may be disposed on a line electrically connecting the point a 911 and a first terminal (e.g., the RF1 terminal 440a of FIG. 7) of the switch circuit 930, the first inductor L1 may be disposed on a line electrically connecting the point b 913 and a second terminal (e.g., the RF2 terminal 440b of FIG. 7) of the switch circuit 930, the second capacitor C2 may be disposed on a line electrically connecting the point c 915 and a third terminal (e.g., the RF3 terminal 450a of FIG. 7) of the switch circuit 930, and the inductor L2 may be disposed on a line electrically connecting the point d 917 and the fourth terminal (e.g., the RF4 terminal 450b of FIG. 7) of the switch circuit 930.

According to an embodiment, the switch circuit 930 of a DP4T type may include four throw terminals (first to fourth terminals) and one pole terminal (e.g., the RFC terminal 700 of FIG. 7). The four throw terminals (first to fourth terminals) may be electrically connected to points (911, 913, 915, 917) of the feeding line through a predetermined lumped element. As described above, the feeding line may be a transmission line that electrically connects the feeding point (a) and the RF module (b). The switching circuit 930 may include four switches (sw1, sw2, sw3, sw4) (e.g., the four switches (sw1, sw2, sw3, sw4) (710, 720, 730, 740) of FIG. 7) and the four stoppers (sh1, sh2, sh3, sh4) (e.g., four stoppers (sh1, sh2, sh3, sh4) (750, 760, 770, 780) of FIG. 7). The four switches (sw1, sw2, sw3, sw4) and the four stoppers (sh1, sh2, sh3, sh4) may be disposed between the first terminal and the third terminal or between the second terminal and the fourth terminal, according to a predetermined pattern. For example, the first and fourth switches sw1 and sw4 may be disposed in series with the first terminal and the fourth terminal, and the second and third switches sw2 and sw3 may be disposed in series with the second terminal and the third terminal. As another example, the first stopper sh1 may be disposed between the first terminal and the ground, the second stopper sh2 may be disposed between the second terminal and the ground, the third stopper sh3 may be disposed between the third terminal and the ground, and the fourth stopper sh4 may be disposed between the fourth terminal and the ground. The four stoppers (sh1, sh2, sh3, sh4) may be one type of switches.

According to an embodiment, the four switches (sw1, sw2, sw3, sw4) and the four stoppers (sh1, sh2, sh3, sh4) included in the switch circuit 930 may be opened (or turned off) or short-circuited (or turned on) under the control of an external device (e.g., the processor 210 of FIG. 2). In the switch circuit 930, various impedance matching topologies of antennas may be formed by turning on or off the switches (sw1, sw2, sw3, sw4) and/or the stoppers (sh1, sh2, sh3, sh4). For example, the impedance matching topology of the antenna to be formed by the switch circuit 930 may be determined by at least one switch and/or at least one stopper controlled to an on state, among the switches (sw1, sw2, sw3, sw4) and the stoppers (sh1, sh2, sh3, sh4). Examples of various impedance matching topologies of the antennas may be substantially the same as those described above with reference to FIGS. 8A to 8F.

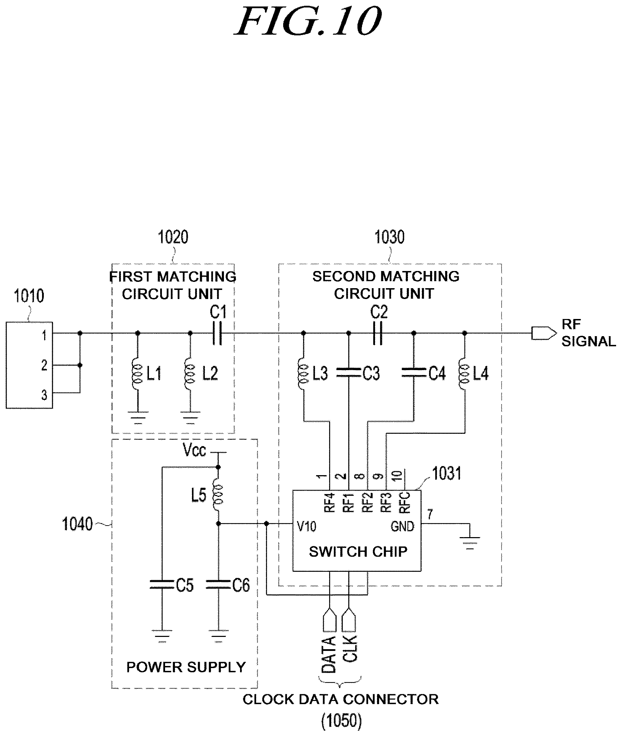

FIG. 10 illustrates an example of application of an impedance matching circuit in an electronic device according to an embodiment.

Referring to FIG. 10, an impedance matching circuit applied to an electronic device (e.g., the electronic device 101 of FIG. 1) according to an embodiment may include a connection port 1010, a first matching circuit unit 1020, a second matching circuit unit 1030 (e.g., the matching unit 230 of FIG. 2), a power supply 1040, and/or a clock data connector 1050.

According to an embodiment, the connection port 1010 (e.g., C-clip) may be a feeding point (e.g., the feeding point (a) of FIG. 2) that electrically connects an antenna (e.g., the antenna 240 of FIG. 2) and the impedance matching circuit. The connection port 1010 may receive an RF signal to be transmitted through an antenna from the impedance matching circuit, or may transmit an RF signal received through the antenna to the impedance matching circuit.

According to an embodiment, the first matching circuit unit 1020 may include a first capacitor C1, a first inductor L1, or a second inductor L2. The first capacitor C1 may be positioned on a path electrically connecting the connection port 1010 and the second matching circuit unit 1030 in series. The first and/or second inductors L1 and L2 may be positioned between a point and a ground on a path electrically connecting the connection port 1010 and the first capacitor C1.

According to an embodiment, the second matching circuit unit 1030 may include a second capacitor C2, a third capacitor C3, a fourth capacitor C4, a third inductor L3, a fourth inductor L4, and/or a switch chip 1031. The second capacitor C2 may correspond to, for example, the lumped element 320 of FIG. 3, the third capacitor C3 and/or the third inductor L3 may correspond to, for example, the first lumped element 420 of FIG. 4A or 4C, the fourth capacitor C4 and/or the fourth inductor L4 may correspond to, for example, the second lumped element 430 of FIG. 4B or 4C, and the switch chip 1031 may correspond to, for example, the switch circuit 410 of FIG. 4A, FIG. 4B, or FIG. 4C.

According to an embodiment, the second matching circuit unit 1030 may have the structure illustrated in FIG. 9. The three capacitors (C2, C3, C4) included in the second matching circuit unit 1030 may correspond to the capacitors (C, C1, C2) illustrated in FIG. 9. The two inductors (L3, L4) included in the second matching circuit unit 1030 may correspond to the first inductor L1 or the second inductor L2 illustrated in FIG. 9. The switch chip 1031 may correspond to the switch circuit 930 illustrated in FIG. 9. The second matching circuit unit 1030 may receive an RF signal to be transmitted from an RF module (or RFIC) (e.g., the RF module 220 of FIG. 2) to transmit the RF signal to the first matching circuit unit 1020, or may receive an RF signal received from the first matching circuit unit 1020 to transmit the RF signal to the RF module.

According to an embodiment, the power supply 1040 may include a fifth inductor L5, a fifth capacitor C5, or a sixth capacitor C6. The fifth inductor L5 may be connected in series between the sixth capacitor C6 and the supply voltage Vcc and the ground. The fifth capacitor C5 may be disposed between the supply voltage Vcc and the ground. A point between the fifth inductor L5 and the sixth capacitor C6 may be electrically connected to the second matching circuit unit 1030, in particular, the terminal V10 supplying a voltage for driving the switch chip 1031.

According to an embodiment, the clock data connector 1050 may be electrically connected to data and clock terminals of the switch chip 1031 included in the second matching circuit unit 1030, thereby supplying data and a clock signal to the switch chip 1031.

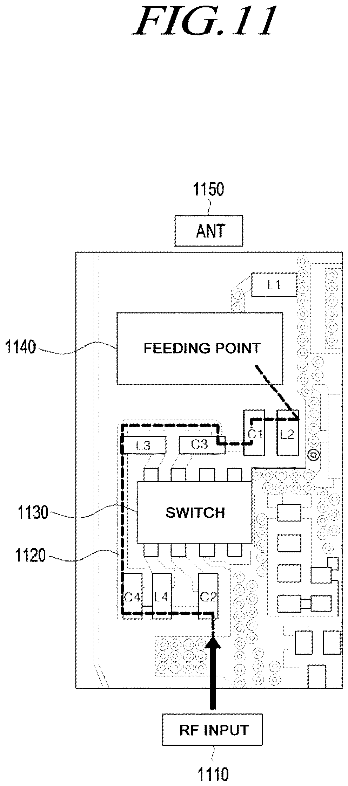

FIG. 11 illustrates an example a structure in which an impedance matching circuit is mounted in an electronic device according to an embodiment.

Referring to FIG. 11, it is illustrated that a first capacitor C1 and two inductors L1 and L2 included in a first matching circuit (e.g., the first matching circuit unit 1020 of FIG. 10), three capacitors (C2, C3, C4) and two inductors (L3, L4) included in a second matching circuit (e.g., the second matching circuit unit 1030 of FIG. 10), and a switch 1130 (e.g., the switch chip 1031 of FIG. 10) may be disposed between an RF input 1110 and a feeding point 1140 (e.g., the connection port 1010 of FIG. 10) electrically coupled to an antenna 1150. In an embodiment, those passive elements included in the first and second matching circuits may form a main path 1120 through which an RF signal is input and transmitted to the feeding point 1140.

According to an embodiment, a feeding unit in the electronic device may refer to only the feeding point 1140, or may refer to both the feeding point 1140 and the first and second matching circuits in an integrated manner.

While the disclosure has been particularly illustrated and described with reference to certain embodiments, it will be understood by those having ordinary skill in the art that various changes and modifications may be made in their form and details without departing from the idea and scope of the disclosure as defined by the appended claims and their equivalents.

According to an embodiment of the disclosure, an electronic device (e.g., the electronic device 101 of FIG. 1) may comprise: an antenna radiator (e.g., the antenna 240 of FIG. 2); a radio frequency (RF) module (e.g., the RF module 220 of FIG. 2) processing an RF signal; a feeding line (e.g., the first section 550a and the second section 550b of FIG. 5) electrically connecting the antenna radiator with the RF module; a switch circuit (e.g., the switch circuit 410 of FIGS. 4A to 4C or FIG. 5) electrically coupled to a plurality of points including one or more first points (e.g., the first point 330 of FIGS. 3 or 4A to 4C or FIG. 5) and one or more second points (e.g., the second point 340 of FIGS. 3 or 4A to 4C or FIG. 5), positioned on the feeding line, and formed in a parallel structure with respect to the feeding line; a first lumped element (e.g., the lumped element 320 of FIG. 3 or the first element 320 of FIG. 5) disposed between the one or more first points and the one or more second points on the feeding line; and a second lumped element (e.g., the first lumped element 420 of FIG. 4A, FIG. 4C, or FIG. 5) disposed between the one or more first points and at least one first terminal (e.g., the first terminal 440 of FIG. 4A, FIG. 4C, or FIG. 5) included in the switch circuit.

According to an embodiment of the disclosure, the electronic device may further comprise a third lumped element (e.g., the second lumped element 430 of FIGS. 4B and 4C) disposed between the one or more second points and at least one second terminal included in the switch circuit.

According to an embodiment of the disclosure, a third terminal (e.g., the at least one pole terminal RFC 700 of FIG. 7) included in the switch circuit may be opened to connect a transmission/reception path of the RF signal.

According to an embodiment of the disclosure, a third terminal (e.g., the at least one pole terminal RFC 700 of FIG. 7) included in the switch circuit may be short-circuited to connect the transmission/reception path of the RF signal.

According to an embodiment of the disclosure, the switch circuit may further comprise at least one second terminal (e.g., the second terminal 450 of FIG. 4A, FIG. 4C, or FIG. 5) electrically coupled to the one or more second points.

According to an embodiment of the disclosure, a third terminal (e.g., the at least one pole terminal RFC 700 of FIG. 7) included in the switch circuit may be opened to connect the transmission/reception path of the RF signal.

According to an embodiment of the disclosure, the switch circuit may comprise four terminals (e.g., two first terminals RF1 and RF2 (440a, 440b) of FIG. 7 and the two second terminals RF3 and RF4 (450a, 450b) of FIG. 7) including the at least one first terminal, each of two (a) terminals (e.g., the two first terminals RF1 and RF2 (440a, 440b) of FIG. 7) formed in pairs on one side of the switch circuit among the four terminals is electrically coupled to one point positioned on the feeding line, in proximity to the antenna radiator among the plurality of first points, and each of two (b) terminals (e.g., the two second terminals RF3 and RF4 (450a, 450b) of FIG. 7) formed in pairs on another side of the switch circuit among the four terminals is electrically coupled to one point positioned on the feeding line, in proximity to the RF module among the plurality of second points.

According to an embodiment of the disclosure, a third terminal (e.g., the at least one pole terminal RFC 700 of FIG. 7) included in the switch circuit may be opened to connect the transmission/reception path of the RF signal.

According to an embodiment of the disclosure, the electronic device may further comprise a third lumped element (e.g., the lumped elements 420a and 420b of FIGS. 8A to 8F) disposed to electrically couple at least one of the (a) terminals and one of the plurality of first points.

According to an embodiment of the disclosure, the electronic device may further comprise a fourth lumped element (e.g., the lumped elements 430a and 430b of FIGS. 8A to 8F) disposed to electrically couple at least one of the (b) terminals and one of the plurality of second points.

According to an embodiment of the disclosure, the switch circuit may comprise: at least one first terminal (e.g., the first terminal 440 of FIG. 6) electrically coupled to the one or more first points positioned on the feeding line, in proximity to the antenna radiator among the plurality of points; at least one second terminal (e.g., the second terminal 450 of FIG. 6) electrically coupled to the one or more second points positioned on the feeding line, in proximity to the RF module among the plurality of points; a first switch and a second switch (e.g., the first switch sw1 610 and the second switch sw2 620 of FIG. 6) disposed in series on a path connecting the at least one first terminal and the at least one second terminal; a first stopper (e.g., the first stopper sh1 630 of FIG. 6) disposed between a point existing between the at least one first terminal and the first switch, and a ground; and a second stopper (e.g., the first stopper sh1 630 of FIG. 6) disposed between a point existing between the at least one second terminal and the second switch, and the ground.

According to an embodiment of the disclosure, the switch circuit may further comprise a third terminal (e.g., at least one pole terminal RFC 700 of FIG. 7) that is open, as a terminal to which a transmission/reception path of the RF signal may be connected.

According to an embodiment of the disclosure, the switch circuit may further comprise a third terminal (e.g., at least one pole terminal RFC 700 of FIG. 7) that is short-circuited, as a terminal to which a transmission/reception path of the RF signal may be connected.

According to an embodiment of the disclosure, the electronic device may further comprise a third lumped element (e.g., the lumped elements 430a and 430b of FIGS. 8A to 8F) disposed to electrically connect the one or more second points and the at least one second terminal included in the switch circuit.

According to an embodiment of the disclosure, the switch circuit may comprise: (1-1)th and (1-2)th terminals (e.g., two first terminals RF1 and RF2 (440a, 440b) of FIG. 7) electrically coupled to (1-1)th and (1-2)th points, respectively, positioned on the feeding line, in proximity to the antenna radiator among the plurality of points; (2-1)th and (2-2)th terminals (e.g., two second terminals RF3 and RF4 (450a, 450b) of FIG. 7) electrically coupled to (2-1)th and (2-2)th points, respectively, positioned on the feeding line, in proximity to the RF module among the plurality of points; first and second switches (e.g., the first switch sw1 (710) and the second switch sw2 (720) of FIG. 7) disposed in series on a path connecting the (1-1)th terminal and the (2-1)th terminal; third and fourth switches (e.g., the third switch sw3 (730) and the fourth switch sw4 (740) of FIG. 7) disposed in series on a path connecting the (1-2)th terminal and the (2-2)th terminal; a first stopper (e.g., the first stopper sh1 (750) of FIG. 7) disposed between a point existing between the (1-1)th terminal and the first switch, and a ground; a second stopper (e.g., the second stopper sh2 (760) of FIG. 7) disposed between a point existing between the (2-1)th terminal and the second switch, and the ground; a third stopper (e.g., the third stopper sh3 (770) of FIG. 7) disposed between a point existing between the (1-2)th terminal and the third switch, and the ground; and a fourth stopper (e.g., the fourth stopper sh4 (780) of FIG. 7) disposed between a point existing between the (2-2)th terminal and the fourth switch, and the ground.

According to an embodiment of the disclosure, the switch circuit may further comprise a fifth terminal (e.g., the pole terminal 700 of FIG. 7) that is open, as a terminal to which the transmission/reception path of the RF signal may be connected.

According to an embodiment of the disclosure, the switch circuit may further comprise a fifth terminal (e.g., the pole terminal 700 of FIG. 7) that is short-circuited, as a terminal to which the transmission/reception path of the RF signal may be connected.

According to an embodiment of the disclosure, the electronic device may comprise a (1-1)th lumped element (e.g., the lumped element 420a of FIGS. 8A to 8F) disposed to electrically connect the (1-1)th point and the (1-1)th terminal included in the switch circuit, and a (1-2)th lumped element (e.g., the lumped element 420b of FIGS. 8A to 8F) disposed to electrically connect the (1-2)th point and the (1-2)th terminal included in the switch circuit.

According to an embodiment of the disclosure, the electronic device may comprise a (2-1)th lumped element (e.g., the lumped element 430a of FIGS. 8A to 8F) disposed to electrically connect the (2-1)th point and the (2-1)th terminal included in the switch circuit, and a (2-2)th lumped element (e.g., the lumped element 430b of FIGS. 8A to 8F) disposed to electrically connect the (2-2)th point and the (2-2)th terminal included in the switch circuit.

According to an embodiment of the disclosure, the electronic device may comprise a sub-impedance matching circuit (e.g., the first matching circuit 1020 of FIG. 10) disposed to electrically connect the antenna radiator and the at least one first terminal included in the switch circuit.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled to the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device, comprising:
an antenna radiator;
a radio frequency (RF) module processing a RF signal;
a feeding line electrically connecting the antenna radiator with the RF module;
a switch circuit electrically coupled to a plurality of points including one or more first points and one or more second points positioned on the feeding line, the switch circuit being disposed in a parallel structure with respect to the feeding line;
a first lumped element disposed between the one or more first points and the one or more second points on the feeding line; and
a second lumped element disposed between the one or more first points and at least one first terminal included in the switch circuit.

2. The electronic device of claim 1, further comprising a third lumped element disposed between the one or more second points and at least one second terminal included in the switch circuit.

3. The electronic device of claim 1, wherein the switch circuit includes a third terminal that is opened or short-circuited to be connected to a transmission/reception path of the RF signal.

4. The electronic device of claim 1, wherein the switch circuit further comprises at least one second terminal electrically coupled to the one or more second points.

5. The electronic device of claim 1, wherein the switch circuit comprises four terminals including the at least one first terminal,
wherein each of two (a) terminals disposed in pairs on one side of the switch circuit among the four terminals is electrically coupled to one point positioned on the feeding line, in proximity to the antenna radiator among the one or more first points, and
wherein each of two (b) terminals disposed in pairs on another side of the switch circuit among the four terminals is electrically coupled to one point positioned on the feeding line, in proximity to the RF module among the one or more second points.

6. The electronic device of claim 4 or 5, wherein the switch circuit includes a third terminal that is opened to be connected to a transmission/reception path of the RF signal.

7. The electronic device of claim 5, further comprising:
a third lumped element disposed to electrically couple at least one of the (a) terminals and one of the one or more first points, and
a fourth lumped element disposed to electrically couple at least one of the (b) terminals and one of the one or more second points.

8. The electronic device of claim 1, wherein the switch circuit comprises:
the at least one first terminal electrically coupled to the one or more first points positioned on the feeding line, in proximity to the antenna radiator among the plurality of points;
at least one second terminal electrically coupled to the one or more second points positioned on the feeding line, in proximity to the RF module among the plurality of points;
a first switch and a second switch disposed in series on a path connecting the at least one first terminal and the at least one second terminal;
a first stopper disposed between a point existing between the at least one first terminal and the first switch, and a ground; and
a second stopper disposed between a point existing between the at least one second terminal and the second switch, and the ground.

9. The electronic device of claim 8, wherein the switch circuit further comprises a third terminal that is opened or short-circuited to be connected to a transmission/reception path of the RF signal.

10. The electronic device of claim 8, further comprising a third lumped element disposed to electrically connect the one or more second points and the at least one second terminal included in the switch circuit.

11. The electronic device of claim 1, wherein the switch circuit further comprises:
(1-1)th terminal and (1-2)th terminal electrically coupled to (1-1).:1: point and (1-2)th point, respectively, positioned on the feeding line, in proximity to the antenna radiator among the plurality of points;
(2-1)th terminal and (2-2)th terminal electrically coupled to (2-1)th point and (2-2)th point, respectively, positioned on the feeding line, in proximity to the RF module among the plurality of points;
a first switch and a second switch disposed in series on a path connecting the (1-1)th terminal and the (2-1)th terminal;
a third switch and a fourth switch disposed in series on a path connecting the (1-2)th terminal and the (2-2)th terminal;
a first stopper disposed between a point existing between the (1-1)th terminal and the first switch, and a ground;
a second stopper disposed between a point existing between the (2-1)th terminal and the second switch, and the ground;
a third stopper disposed between a point existing between the (1-2)th terminal and the third switch, and the ground; and
a fourth stopper disposed between a point existing between the (2-2)th terminal and the fourth switch, and the ground.

12. The electronic device of claim 11, wherein the switch circuit further comprises a fifth terminal that is opened or short-circuited to be connected to transmission/reception path of the RF signal.

13. The electronic device of claim 11, wherein the switch circuit further comprises:
a (1-1)th lumped element, wherein the (1-1)th point and the (1-1)th terminal included in the switch circuit are electrically connected to each other; and
a (1-2)th lumped element, wherein the (1-2)th point and the (1-2)th terminal included in the switch circuit are electrically connected to each other.

14. The electronic device of claim 11, further comprising:
a (2-1)th lumped element, wherein the (2-1)th point and the (2-1)th terminal included in the switch circuit are electrically connected to each other; and
a (2-2)th lumped element, wherein the (2-2)th point and the (2-2)th terminal included in the switch circuit are electrically connected to each other.

15. The electronic device of claim1, further comprising a sub-impedance matching circuit, wherein the antenna radiator and the at least one first terminal included in the switch circuit are electrically connected to each other.
